# EUROPEAN PATENT SPECIFICATION

(11) **EP 1 695 321 B1**
(45) Date of publication and mention of the grant of the patent: **25.03.2009**
(21) Application number: 04798654.2
(22) Date of filing: 24.11.2004
(51) Int. Cl.: G08G 1/123

(54) **METHOD AND SYSTEM FOR ASSISTING THE PASSAGE OF AN ENTITY THROUGH SUCCESSIVE ZONES TO A DESTINATION**
VERFAHREN UND SYSTEM ZUM HELFEN BEIM DURCHGANG EINER ENTITÄT DURCH SUKZESSIVE ZONEN ZU EINEM ZIEL
PROCEDE ET SYSTEME POUR AIDER AU PASSAGE D'UNE ENTITE A TRAVERS DES ZONES SUCCESSIVES JUSQU'A UNE DESTINATION

(30) Priority: 24.11.2003 GB 0327290
(43) Date of publication of application: 30.08.2006
(73) Proprietor: Mantic Point Solutions Limited, Leeds LS11 5QP (GB)
(72) Inventor: WINAND, Henri Michel Andre, Leicester Leicestershire LE2 5PA (GB); OLIVER, Richard, Derby Derbyshire DE23 3ST (GB); HARRIS, Paul, Derby Derbyshire DE3 0SH (GB)
(74) Representative: Hodsdon, Stephen James
(86) International application number: PCT/GB2004/004948
(87) International publication number: WO 2005/052885

(56) References cited:
- WO-A-93/04425
- US-A- 5 043 908

## Description

### Field of the Invention

The present invention relates to a method and system for assisting the passage of an entity through successive zones to a destination. It is particularly, but not exclusively, related to a method and apparatus for assisting the movement of passengers and/or luggage, and especially for reducing passenger related delays in a transport environment.

### Background

Recent developments in smart passive and/or active labels (e.g. devices known as Radio Frequency Identification tags or RFIDs) mean that the cost of such labels has dramatically reduced whilst their availability and reliability have increased significantly. This makes their use possible in arenas such as logistics of goods and parts. For example, companies such as Philips and Motorola manufacture the active or passive RFIDs that are integrated in stickers or labels by companies such as 3M. Such devices enable real time tracking of entities (e.g. passengers, luggage, etc.) by sensors located in a variety of locations.

Thus US patent 4711994 proposes a method for maintenance of a close and accurate security surveillance for both passengers and their baggage on a public conveyance to ensure that, before departure, baggage is not loaded aboard the conveyance without prior positive identification that the owner or the passenger has, in fact, been properly boarded.

US patent 6158658 elaborates this concept to once again enhance passenger security by matching the register of passengers who actually boarded with that of loaded luggage.

Other patent publications revolve around the concept of matching passengers with luggage for improved security. Thus US patent 6222452 proposes using RFIDs to tag luggage and focuses essentially on matching passengers with luggage; US patent application 20030128100A1 focuses on the continuous tracking of tags throughout a facility; and EP-A-0940763 focuses on the reconciliation of passengers, luggage and cargo.

The above prior art systems generally address the problems of tracking passengers and/or luggage, and of matching passengers and luggage at their destination (e.g. an aircraft). However, none of the systems provide a method which can track the progress of passengers, vehicle crews, on-board staff and/or luggage towards their final destination and can anticipate and take appropriate action, such as preventative action, before a process failure occurs.

Furthermore, whilst the above prior art suggests potential benefits for the system operators, such as airlines and airports, there is little or no benefit for passengers.

The above prior art also does not relate to management of vehicle crews, although delayed crew arrivals can be an issue for operators and passengers alike. For example, problems can arise if technical issues on incoming vehicles (aircraft/trains/buses) result in late arrival of crew who are due to move on to work on a different vehicle or, for example in cases of industrial action, if the operator only has a limited number of crews that it can rotate between vehicles. Knowing where available crews are and how far/long they are away from the vehicles that they are due to work on would be very useful for the aforementioned operators.

The above prior art systems also do not demonstrate the ability to react to operational variations.

Furthermore, the above prior art systems also are not adapted for minimising the generated data arising from the tracking of a large number of entities.

### Summary of the Invention

An aim of the present invention is to provide a method and system which address one or more of these issues.

Accordingly, the present invention introduces the concept of a sequence of zones through which an entity (e.g. a passenger, a member of a vehicle crew or staff, or an item of luggage) travels on its way to a destination (e.g. the departure gate of an airport). This allows the adoption of a time-based and zone-based system, where a predetermined arrival time at the destination can be used as the driver for ensuring the entity progresses to the destination on time.

Thus a first aspect of the present invention provides a method of assisting the passage of an entity through successive zones to a destination, including the steps of:
associating an identifier with said entity;
creating a plurality of required incidents for said entity, each required incident having a place reference and a time reference associated with it, the required incidents including a final incident for which the place reference is the destination and the time reference is a predetermined time;
at intervals, detecting the presence of said entity in one of said zones and the time of said presence, thereby generating a match;
registering correspondences between the matches thus-generated and said required incidents; and
generating an alert for the entity when the time reference for a required incident is reached and that incident does not have a corresponding match.

The entity may be a person or an item of luggage. The alert may be for example a speaker announcement, an e-mail (e.g. delivered to a Blackberry(TM) device), a voice message, a pager message, an MMS message, a message delivered by a person or an SMS message to the person. Where the entity is a person, the message may be directed to the person. Where the entity is an item of luggage, the message may be directed to a baggage handler.

Where the alert is delivered to a person, then any available system or protocol can be used, including, but not limited to, WIFI, WIMAX, BlueTooth, infra red or local relaying. For short range protocols or systems, the alert can be delivered directly to a device (e.g. a phone, PDA or headset) carried by the person.

It is envisaged that the invention may be applied to many situations, for example to travel interchanges, termini or transportation hubs such as airports, shipping ports, bus and train stations. Likewise, the method may be used in civil or military applications. The method is also applicable to events, e.g. sports events.

In preferred embodiments, the destination is a departure gate of the transportation hub or travel interchange, and in particular of an airport. The zones in such cases are areas within the hub and optionally areas of the surrounding environment as well.

In some embodiments the method may be implemented in an "arrivals" area of the transportation hub or travel interchange. In such embodiments, the destination may be, for example, the baggage collection area, passport control or customs.

Choke points in the movement of entities, for example security or passport control areas, may be separately designated zones. Choke points outside the facility (e.g. traffic junctions, toll gates, service stations) may also be separately designated zones.

Choke points are taken to be places through which all, or substantially all entities, or entities of a particular type pass on the way to a destination. This includes so called "convergence points" which are places that there is a high degree of probability that an entity will pass through.

The zones are not necessarily contiguous or overlapping, and may be separated by areas which are not part of any zone.

Typically, the identifier is a wireless identification tag, such as an RFID. In certain embodiments the tag may be a passive tag which is energised by a transmitted signal (e.g. an RF signal), which may be transmitted from a detector.

In other embodiments, the identifier is a barcode, which may be printed on a badge, label or other form of documentation and read by a scanner or inputted by an operator.

The method may also include the step of changing a required incident in response to a change in operational conditions. For example, in an airport passenger based embodiment, delays at passport control may increase the time required for passengers who have not passed through passport control to reach their departure gate. The time references of required incidents relating to zones which are the other side of passport control from the departure area (destination) may therefore be changed to earlier times. Alerts may therefore be generated earlier which advise passengers to move towards passport control. As a result, delays in passengers arriving at departure gates as a result of the delays at passport control can be reduced or eliminated.

Alternatively, for example if the departure of a vehicle is delayed, some or all of the required incidents relating to entities associated with a particular final incident may be changed in response to an event. As a result, affected entities, in particular people, may be allowed to return to previous zones or to stay longer in the zones they are currently in, or even prevented or encouraged not to proceed to an adjacent zone. Thus, for example, passengers in a transport environment may thus enjoy the use of airport facilities such as shops, businesses and rest areas rather than having to proceed to the next area only to be delayed upon arrival in that zone.

Furthermore, a passenger who may have wished to move to the next zone too early may be spared the need to wait in a queue if one is forming in that zone (e.g. at a choke point) or if the next zone is starting to become overcrowded. The method may generate an alert for such passengers, which may result in them being told, e.g. by staff or by other mechanism, that they ought to stay in the zone where they currently are.

It is not necessary to continually monitor the location of every entity of interest to the system. The method may be adapted to interrogate zones for particular identifiers only at defined times. This can help to reduce the volume of data collected from the zones. For example, the sensors at or around a destination may only be activated at a given time before the predetermined time of the final incident. In addition, the number of sensors used to cover an entire complex need not be as high as for a system which provides continual tracking, since the sensors may only be installed at particular areas (corresponding to zones) rather than at all points along all possible routes.

Further advantages of the present invention may arise when one or more entities are linked or associated with each other, for example when entities are both passengers and items of luggage, and where each luggage entity is associated with one or more passenger entities (and/or vice versa). Some of these advantages may result in increased advantage to the passenger, thereby making acceptance by passenger users more likely.

Alternatively or in addition to the above situation where a passenger is associated with his or her luggage or a soldier is associated with his or her kit, a family arriving at an automated check-in point or usual manned check-in area or other areas may thus create an "inventory" of associated passengers (including or excluding luggage) which may all be checked-in or moved as one entity. This may result in a reduction in transactional time spent in checking in that overall group defined by this "inventory".

Furthermore, the order in which luggage is loaded onto a vehicle (e.g. aircraft, bus, train, etc.) at the destination may be arranged by streaming the order in which the luggage is delivered to the vehicle. In this way, it could be arranged that the luggage of passengers travelling in superior classes be delivered first onto a conveyer belt in the arrival or luggage collection area when the vehicle reaches its destination. Alternatively or additionally, the luggage associated with passengers arriving late at the check-in, or deemed to be at risk of arriving late from a zone location in or outside of the facility or airport, may be located so that it is positioned in a convenient location for offloading, thus reducing or eliminating the delay caused by the need to remove such luggage.

The invention can make it possible to confirm to a passenger prior to departure that.their luggage is also on the vehicle in which they are travelling. Alternatively, in situations where delays have caused luggage to fail to reach the vehicle before the departure time, action can be taken to minimise the inconvenience to the passenger, and redress, such as compensation or alternative arrangements, can be offered to the passenger before arrival at the destination of the vehicle. Such a service would reduce the inconvenience of passengers in waiting at the vehicle destination to determine whether their luggage has arrived, or allow them to make alternative arrangements in advance of their arrival at the vehicle destination.

In an airport environment, for example, the invention can make it possible for passengers and operators to have a better appreciation of potential overbooking of a vehicle, such as an aircraft. If overbooking has, or is likely to occur, the operator can manage the passenger's expectations, and avoid luggage issues well before the passenger has arrived in the embarkation area. This may increase the ability of the airline operator to re-direct the passenger to a different aircraft with their associated luggage in good time, and thereby reduce the cost to the operator of having to compensate passengers. It may also improve the travel experience of passengers by reducing the chance that the vehicle is overbooked by giving an earlier understanding of where passengers are on their way to the departure area.

The method of the present invention may offer further benefits to a passenger entity. For example, where the method is implemented in a transport terminal, a passenger may be able to feel less pressured and/or more relaxed whilst shopping in a terminal building, or whilst waiting in a lounge, and spend less time checking departure boards etc., since they would know that personalised messages will ensure that they move to the next zone in good time to ensure their arrival at the destination by the predetermined time. This may also provide advantages to the operator of the terminal area, as passengers may spend more time in a shopping or refreshment area as a result.

In addition, zones may be defined in areas where advertisement space is located and that the owner usually rents out to advertisers or commercial operators. Both the advertisers/commercial operators and the owner of the space may benefit from knowing the actual time spent by people (i.e. potential customers) in such zones and rental pricing may thus be linked to actual time spent by potential customers in that zone and backed-up with actual evidence of this time.

Thus the present invention may allow the owner to increase their revenues from such advertising space by using the customer dwell times provided in management reports produced by the method or system of the invention.

Alternatively or additionally, zones may be defined in areas where passengers or other people impact on the use of utilities such as water, electricity, waste, etc. and thus the method or system of the invention may yield information which may allow the operator or owner of the facility study or analyse the movement pattern of passengers or users of the facility and trends over the course of a day/week/year of such use, and thus proactively manage the use of such utilities. Thus the present invention may deliver a lower cost or use of such resources to the owner or may have an impact on charges which may benefit the owner or operator of such facilities.

The invention may also enable the construction of cinemas and other time dependent entertainment in transport terminals because of the ability to associate passengers with their time to departure.

The step of detecting may also be carried out at one or more of the entrances to or exits from a retail unit or area, a toilet or rest-room or a restricted access area (such as a business lounge). Data regarding the usage of these facilities may thus be generated, stored and analysed.

Data of this type may allow the operators of the facilities, or of the entire location (e.g. the transportation hub) to better manage the facilities. In particular the usage patterns of the facilities could be analysed and staffing, cleaning or maintenance levels adjusted accordingly. For example, a retailer could determine footfall patterns throughout a day or week or year and open/close checkouts accordingly or determine the effectiveness of a particular retail space arrangement including advertisement space.

The method of this aspect of the present invention may also be adapted or operated so as to customise the journey of individual passengers or groups of passengers. Such customisation may be as a result of operational conditions, such as local flow rates, or as a result of classification of passengers. For example, the method may be adapted so that passengers who have paid for superior class tickets are provided with faster streaming and prompts which allow them to shorten their total journey time through the zones. In another example, alerts generated for particular groups of passengers might suggest that they take alternative routings to reach their destination, e.g. as a result of delays at choke points on some routings.

The method may also use data relating to each entity or group of entities, for example a passenger's name, ultimate destination or flight number to tailor alerts for entities which have not reached the destination by the predetermined time. This allows the alerts, whether they are messages sent or displayed, or broadcast announcements, to be personalised.

The method may also use data relating to the entity to adjust the creation of the required incidents. For example, time references of required incidents may be adjusted to take account of passengers who are less mobile, or who require assistance with boarding.

The zones of the present invention need not be restricted to areas directly associated with the destination (e.g. airport facilities and buildings). Further zones may be defined outside this traditional area of influence, and required incidents set up for key events or time references in those zones, with associated alerts being generated where necessary. This can result in additional services being offered to a passenger.

Where the zones cover areas which are not directly associated with the destination, alerts which can be transmitted to the person, e.g. e-mails, voice messages, pager messages and MMS/SMS messages are particularly useful.

For example, if the start location of the passenger's journey to the destination is known to the operator of the invention, a required incident could be generated with a time reference by which the passenger should have started the journey. The alert generated for this incident could be a telephone call to the passenger's home number, or an SMS/MMS message to the passenger. If the start location is a facility which deals with a number of passengers, such as an airport hotel, a match could be generated by the passenger's departure from that location.

This approach could also be used in situations where the exact starting location of the passenger is not known, for example by generating an alert which informs the passenger that they should be within a certain distance of the destination.

Further inputs, for example from GPS systems, current 2G cell based technology, or other zone based portable device location information, traffic monitoring systems and/or train timetables could be used to calculate or adjust the time reference of such alerts.

Combination with other location systems such as the ability of mobile telephone operators to locate a switched-on handset to within a certain area, or long-rang detection devices could add further services to the customer, whilst reducing the likelihood of a passenger failing to reach the destination before the predetermined time due to external problems.

Thus in development of the invention, a number of different technologies may be integrated to provide a method (or system) which covers the whole (or substantially the whole) journey of the entity from outside a monitored facility (where the destination is) to its destination.

For example, outside of an airport, a passenger entity may be tracked by GSM cell based ("2G") technology. A mobile phone "track" is generally paid for by service providers (i.e. the operators of the present invention). With 2G technology and no additional software on the passenger's phone or the mobile operator's network, allows the service provider to determine the passenger's location to within a 3km radius outside towns and a 50m (or smaller) "cell" within a town.

As mobile telephone technology advances, the granularity of the technology may allow a more refined positioning of the passenger outside of the airport. For example, with 2.5G and 3G services, the track can be made to within a few metres. However, since the present invention is principally concerned with the zone in which the passenger is, a high level of accuracy in locating the passenger is not necessarily required, and the amount of data that is provided to the system of the invention can be managed accordingly.

In a further development, the identifiers may be provided to customers on a permanent basis, e.g. as part of "loyalty cards". If this is the case, then sensor positioned, e.g. in petrol stations or toll booths outside the facility can create zones which do not rely on mobile devices or tracking of mobile telephones.

There are also a number of proposed cheap long-range detection devices associated with local networks of which wOzNet™ is one example.

The wOz Platform^{™} system includes an innovative wireless network, a system reference design, and an online service that serve as the foundation for a range of location, status, control, and communications solutions for consumers and businesses. The heart of the wOz Platform^{™} is the wOzNet™ network, a unique local wireless network that provides long range and long battery life at a low cost.

The present invention may also be used to enable management of the numbers of entities, and in particular people, in a particular location, for example for safety or environmental reasons. The method of the present aspect may thus comprise the further steps of:
setting a limit for the number of people permitted in at least one of the zones;
counting the number of people in said zone;
comparing said number to said limit; and
creating a signal when the number exceeds said limit or when the number approaches said limit to enable restriction of the number of people moving into said zone.

Thus the present invention can allow the number of people entering a particular zone to be restricted for a period of time to reduce or prevent over-crowding. The method can be further adapted so that specific people (e.g. passengers who have a significantly later departure time) are restricted from entering an overcrowded or busy zone, thus giving preference to others who need to reach their destination at an earlier time.

Alternatively or additionally, the invention may be adapted to move people from a busy zone to subsequent zones to prevent overcrowding and allow further people to enter a congested zone.

Thus the method of the present aspect may comprise the further steps of:
setting a limit for the number of people permitted in at least one of said zones;
counting the number of people in said zone;
comparing the number to said limit; and
generating an alert when the number exceeds said limit or when the number approaches said limit to increase the number of people moving out of said zone.

The above additional features may allow the method of the present aspect to effectively adjust the number of people entering and leaving one or more zones. This may allow safety limits on overcrowding to be maintained, and may also prevent unnecessary queuing for services (e.g. security scans/passport control) in a zone. In addition the method may allow the operator to adjust the staffing levels in a particular zone depending on the number of people present.

The limits referred to above may vary over time. In particular a zone may have a particular selection of limits with an appropriate limit being chosen depending on the time or day (or both). The limits can also be actively adjusted, dependent on the time, the existing operating conditions in the facility or as a result of feedback of data relating to other zone conditions.

The monitoring or counting of the number of entities may also including monitoring or counting the number leaving or arriving in the zone.

The present invention may also provide benefits to the operator which is concerned with the entities arriving at the destination by the predetermined time, by reducing the likelihood of process failure due to a delay at that point in their process. This can lead to a reduction in overall costs due to delays, as well as providing statistical information regarding the cause or type of entity (especially when the entity is a human) which leads to any such delay.

The invention may also provide a service which differentiates the operator from its competitors, and thus may provide a competitive advantage.

The method of the present aspect may also provide the step of analysing the matches. Whilst such analysis can be carried out in "real time" or substantially in "real time", the analysis is preferably carried out on historic data that has been collected over a period of time.

The results of the analysis may be used to adjust either or both the place or time reference of one or more required incidents for current and future incidents.

Thus, as a result of the above statistical profiling/analysis, trends in activity and capacity over the course of a day, week, month or year can be used to set the required incidents appropriately (e.g. to reduce the likelihood of delays in particularly busy periods). The result of such analysis(es) may be used at an aggregates data or at any other level or granularity by the operator of the method or system of the invention, for whatever purpose.

Alternatively or additionally to such analysis, the frequency of final incidents (corresponding, for example, to the frequency of departures from a hub) may be used as an indicator of the activity in the zones, and so the time reference and/or place reference of one or more required incidents adjusted accordingly.

For example, as the frequency of flights in an airport increases during a day or season, there is normally a corresponding increase in the time that it takes a passenger to reach the departure gate from the check-in area, due to greater demand on services such as security checks or passport controls. In such a situation, the time references of required incidents during this period can be made earlier than they are during less busy periods, and thus delays reduced or avoided.

Alternatively or additionally, the place reference of required incidents can be adjusted based on information regarding the number and type of people in or passing through one or more zones in a particular period, thus routing people who do not have to pass through busy zones via alternative, e.g. less busy, routes to their destination.

In particular information regarding the type of people covered by the invention may be considered and analysed as discussed above. For example, the behaviour patterns of different types of passengers (retired, disabled, business, men, women, families, etc.) may vary according to the time of the day/week/year, as may their share of the total number of people covered by the method/system. The method may categorise each entity into particular types and assign time and place references of required incidents according to that type. The method may also collect data about the movement of each type of entity thus classified, which can be processed in any of the ways described above.

A development of the present aspect provides a method which further includes the step of detecting the passage of a person through a defined area using secondary detection means and matching each such passage with a detected passage an identifier through the same area, wherein when the passage of a person is detected without a corresponding detected passage of an identifier, an alert is generated.

By using secondary detection means, such as an infra-red detector, a video sensor or a light beam, the above development allows each person passing through the defined area to be checked to ensure that they are carrying the identifier associated with them. The alert in the above development is preferably directed to staff in the defined area, who can respond to the alert by checking the status of the person without the identifier, and take appropriate action, such as issuing a further identifier.

Preferably the steps in the above development are performed at a choke-point in the passage of the person to the destination, and thus all or substantially all of the people concerned are checked in this manner at least once on their way to their destination.

Implementation in an arrivals area can allow the method to be utilised by service providers such as hotels, taxi companies or car rental companies to determine passenger flow data and also passenger preferences.

A second aspect of the present invention provides a system for assisting the passage of an entity through a plurality of successive zones to a destination, the system including:
an identifier for said entity;
storage means for storing a plurality of required incidents for said entity, each required incident having a place reference and a time reference associated with it, the required incidents including a final incident for which the place reference is the destination and the time reference is a predetermined time;
detection means for detecting, at intervals, the presence of said entity in one of said zones and the time of said presence, thereby generating a match;
means for registering correspondences between the matches thus-generated and said required incidents; and
alerting means for generating an alert for the entity when the time reference for a required incident is reached and that incident does not have a corresponding match.

The entity may be a person or an item of luggage. The alert may be for example a speaker announcement, an e-mail, a voice message, a pager message, an MMS message, a message delivered by a person or an SMS message to the person. Where the entity is a person, the message may be directed to the person. Where the entity is an item of luggage, the message may be directed to a baggage handler.

Typically, the identifier is a wireless identification tag, such as an RFID. The tag may be a passive tag which is energised by a transmitted signal (e.g. from the detection means). The detection means may be RF sensors.

In embodiments of the invention the identifier may be a barcode which may be printed on a badge, label or other form of documentation and read by a scanner or inputted by an operator. The detection means in such embodiments are laser scanners or readers. In other embodiments, combinations of different types of detection means and identifier may be used, e.g. wireless identification tags and barcodes.

Preferably the identifier is associated with each entity in such a way that there is little or no change to the way in which the entity is handled or needs to behave. For example, in an airport based embodiment, the identifiers may be attached to or printed onto the boarding cards of passengers. Since the passenger needs to retain this boarding card with them in order to board the aircraft anyway, there need not be any additional requirement on the passenger or little to none on the operators of the aircraft or airport.

In a development of the system, the system further includes secondary detection means for detecting the passage of a person through a defined area, means for registering a correspondence between each such passage and a passage of an identifier detected by the detection means, and alerting means for generating an alert when the passage of a person is detected by said secondary detection means without a corresponding passage of an identifier being detected.

The secondary detection means may include one or more infra-red detector(s), video sensor(s), light beam(s), pressure sensor(s), motion detection sensor(s) or mechanical sensor(s) (e.g. gates, turnstiles, switch or counting sensor) or other mechanical devices capable of detecting the passage of the entity through the check point or zone or choke point or any combination of the said secondary detection means at the said location.

Optionally the system may further comprise storage means for storing a limit value for the number of people permitted in at least one of said zones; and means for monitoring the total number of people in said zone; for comparing said total number to said limit value; and for causing an action depending on the outcome of that comparison.

The action caused by the system may serve either to restrict or increase the number of people moving into the zone in question or to increase or restrict the number of people moving out of that zone, or both. The latter may be accomplished, for example, by generating an alert for people in that zone to cause them to move to a successive zone.

The action may be taken when the number of people in the zone in question reaches the limit value, or may be taken when the number of people in the zone in question approaches the limit value (e.g. when the number is a predetermined fraction of the limit value, or when the number comes within a predetermined absolute value of the limit value). The limit value may be set to allow for a certain "safety margin" in relation to the absolute capacity of the zone in question.

The limits in question may be determined by commercial criteria, for example, if a particular commercial area is highly populated, but an adjacent commercial area is less highly populated, thus creating an imbalance, there may be advantage in causing movement of people into the less populated area. Thus the limits may be adjusted depending on the relative population of particular zones.

The system of the present aspect may include further optional or preferred features which implement corresponding optional or preferred features of the method of the previous aspect.

A further aspect of the present invention provides a computer program which, when executed by a computer, performs the method of the first aspect above. The computer program of this aspect may include further optional or preferred features which perform the corresponding optional or preferred features of the method of the first aspect.

Another aspect of the present invention provides a computer program product containing a computer program according to the previous aspect.

### Brief Description of the Drawings

Embodiments of the present invention will now be described with reference to the drawings, in which:
Figure 1 is a schematic diagram which illustrates the basic concept of an embodiment of the present invention;
Figure 2 is a schematic diagram of a zone in an embodiment of the present invention;
Figure 3 is a schematic diagram of a system according to an embodiment of the present invention.

### Detailed Description

The embodiments below describe the operation of the present invention in a transport environment. For ease of reference, the following terms will be used in the description of these embodiments:
"Vehicle" includes but is not limited to a means of transport, such as a plane, lorry, bus, train, car, boat, etc. and may be civil or military in nature;
A "passenger" is a person or a group of persons who need to reach a given location (the "departure area") at a given time to embark or disembark from a vehicle - as used below this term also includes the crew of a vehicle, who also need to reach a given location at a given time in order for the vehicle to depart;
"Luggage" is an item or a collection of items or cargo, which may be in some way associated with a passenger, and which needs to reach a given location (the "departure area") at a given time in order to be placed on or removed from a vehicle;
A "vehicle operator" is the operator of one or more vehicles onto which passenger(s) and/or luggage are to be loaded;
A "facilities operator" is the operator of the whole or a part of the departure or arrival facilities from which the vehicles are arriving or departing; and
The "departure area" or "destination" is the area from/at which a vehicle is scheduled to leave/arrive at a particular time and therefore where all passengers and/or luggage should arrive for timely departure/arrival.

The present invention may be used to increase the probability of on-time arrival of a passenger, luggage, a matched combination of the two, or vehicle crew at the relevant departure area before the scheduled departure time of the vehicle.

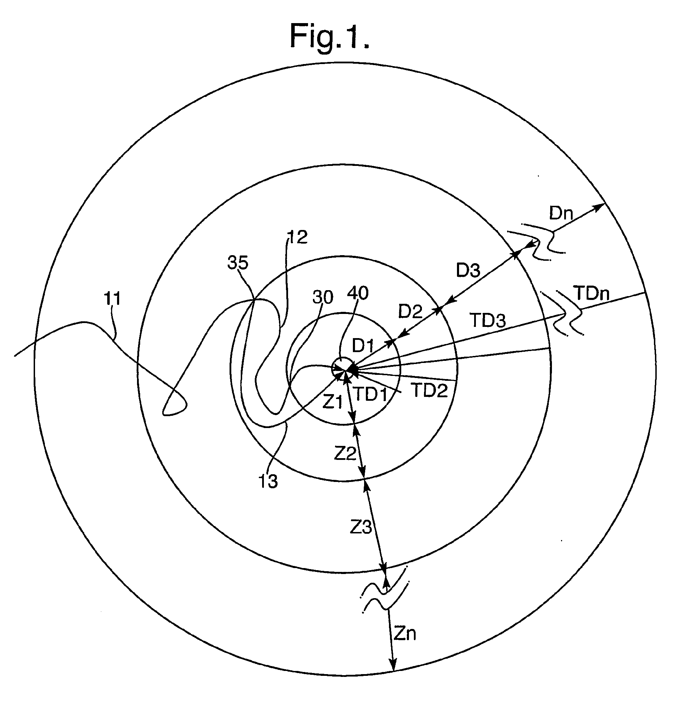

The basic concept of an embodiment of the present invention will be illustrated with reference to Figure 1, which shows a number of zones Z1 to Zn. These zones are illustrated in Figure 1 as concentric annuli for convenience, but in reality could take any shape depending on the configuration of buildings or areas of interest. In particular zones may be isolated islands and there may be several pockets of zones within zones.

A passenger (not shown) makes a journey through the zones to the departure area 40, as illustrated by lines 11 and 12; line 11 representing the passenger's journey with their luggage and line 12 representing the passenger's journey after being separated from their luggage at check-in desk 35. From the check-in desk 35, the luggage follows a separate route, illustrated by line 13, to the departure area 40.

For each zone, the local physical distance which has to be covered by a passenger or by luggage to pass from the previous zone to the next zone (D1 to Dn respectively) is either known, or can be calculated by the system embodying the invention as a function of one or more of the travelling behaviour of the passenger or luggage, local prevailing conditions and the required or preferred paths through that zone.

As a consequence, the total distance (T1 to Tn respectively) between the passenger and/or luggage in a particular zone and the departure area 40 is also known, or can be calculated by the system embodying the invention.

The vehicle is scheduled to leave from a departure area 40, which may be a specific point in Z1 as shown in Figure 1, or in alternative embodiments may be set up as Z1 itself, at a well-defined time. The object is to ensure that the passenger, luggage or matched combination, as appropriate of the two arrive at the vehicle in good time before departure so that there is a high probability of the vehicle leaving at its scheduled departure time.

Since the distances are known it is possible to calculate or estimate the time by which a passenger or luggage must be in a particular zone (Zn), or have crossed from one zone (Zn) to the next zone (Zn-1) such that the passenger or luggage has sufficient time remaining to complete the journey 11, 12 or 13 to the departure area 40 by the required time. This estimate can also be based on local flow information such as the length of time it has taken previous passengers and/or luggage to make a similar journey.

This methodology is implemented in a system which processes the information from remote identification devices, such as sensors and tags. The system of the present embodiment also includes means capable of broadcasting appropriate messages to passengers or facilities operators, for example using speaker systems, display screens or SMS messaging.

This embodiment of the present invention uses a so-called "right to left" time plan which works backwards in time from an event which is scheduled to take place at a predetermined time (although that time may be altered during the embodiment), which in this embodiment is the departure of the vehicle from the departure area at the scheduled departure time. This is also referred to as a "pull" system for the entity (e.g. passenger, vehicle crew or luggage) since each stage in the movement of the entity is driven by the need to meet future requirements rather than by previous events.

The processing of data generated by the sensors and detectors is carried out by a zone management system, which also handles the creation of required incidents for each entity (e.g. passenger, vehicle crew or luggage) and registers correspondences between the data generated by the sensors and detectors and the required incidents. The zone management system may be implemented in a dedicated computer system, or may be implemented on computer systems which are already in use at the facility. Parts of the zone management system may be implemented on interconnected computer systems.

The system is set-up to increase the probability that all passengers, vehicle crew and/or luggage as applicable are "pulled" into a particular zone by a particular time, with the ultimate object of their arrival in the departure area by the predetermined time to allow prompt departure of the vehicle at its scheduled time. Where possible, the system is set up to minimise the impact on the passenger or on the staff of the vehicle or facilities operator.

Preferably the interrogation of sensors or tags is carried out early enough in the journey, as a result of the time references on the required incidents, to allow for corrective actions to take place if an entity has failed to move as required through one or more zones.

At predetermined times before the passenger embarkation is required for smooth departure of the vehicle, one or more sensors are activated in the appropriate zone or in the departure area. This activation of sensors may be automatic, as a result of required incidents with an imminent time reference, or may be done at regular intervals. If the sensor fails to generate a match for any passenger or luggage in an appropriate zone such that a correspondence is made with a required incident before the time reference of that required incident, an alert is generated which is aimed at resolving the failure, for example by reminding a passenger to proceed to a particular area of the facility (security check, passport control, gate, etc.) or by messaging the luggage handling operations to expedite the arrival of the luggage entity.

The presence of sensors throughout the facility may mean that it is possible to locate the passenger or luggage to which the alert relates, and thereby target the alert, for example by only making an announcement over a particular set of loudspeakers, or on a particular selection of screens.

It is preferable that the identifiers can be encoded and/or programmed and thus the identifiers associated with passengers and/or luggage are encoded with details regarding one or more of: the passenger themselves; the passenger to which luggage belongs; trip details of the passenger; etc.. This information may also be held in the zone management system.

Optionally, the identifiers may be programmed with the maximum lengths of time that passengers or luggage are likely to take to travel through each zone on their route to the departure area, as well as the predetermined time by which the entity must reach their destination. With this information locally held on the identifier, sensors located at particular points along the journey route to the departure area only need to have accurate time information (e.g. a clock) to check whether the identifier associated with a passenger or with luggage passes the sensor location with enough time left to reach the next zone and/or the departure area in good time.

The identifiers may be encoded either by the arrival of the passenger in the facilities or as the identifiers pass through the zones. Thus programmable identifiers may be updated as they pass through the zones, for example to reflect changes in operational conditions within the facility.

The data on the identifier or in the system may be supplemented by a code associated with the statistical travel behaviour of passengers and/or reliability data on the luggage transportation system. With such information, a local evaluation of the time left to reach the next zone or departure area can be calculated in the sensor and associated systems to improve the chances that the passenger and/or luggage reach the next zone or departure area in good time. If there is a possibility that this will not be the case, the sensor could raise an exception message which is picked up by the zone monitoring system, resulting in appropriate action being taken, such as the generation of an alert.

Alternatively, the identifier could be put into a state corresponding to a particular zone and/or time by sensors placed at particular locations or areas along the journey to the departure area, so that when it is interrogated by sensors in the same area, or broadcasts its state to local sensors, the sensor would be able to determine whether the identifier (and therefore the passenger or luggage) is in the right area. If this is not the case, the sensor raises an exception message to the zone management system. As an alternative, if the identifier itself has processing capability, it may raise the exception message itself, through the sensor. The exception message may include personal and trip details for the passenger or luggage, to allow the appropriate alert to generated or simply the identifier (e.g. the barcode number, or in the case of an RFID, a unique hardcoded very large number ("EPC number")) carried on the tag or pass which, when related to the central system is compared with a centrally held entity register prompt the central system to generate an alert.

In a development of the above alternative, where the identifier is increasingly sophisticated, the identifier also contains the personal and trip information. The sensors then only need to broadcast information regarding their location (or zone) along the journey to the departure area, and time information (although this may also be included on the identifier in the form of a clock). If the identifier recognises that it is not in the zone that it ought to be in order for the passenger or luggage with which it is associated to reach the departure area in good time, the identifier can raise an exception message through the sensor which is then handled by the system.

In a development of the above, the sensors could relay simple information to passengers in their range using one of a variety of means, such as a display or voice message, which may include relevant information such as the time that they have left to reach their vehicle in good time and the location of the vehicle/departure area that they have to reach or display or convey (e.g. by a voice announcement, a sign on a screen of the sensor, a print-out or a message provided to the passenger's mobile phone, PDA or portable computer, for example by Bluetooth, infra red connection or SMS/MMS) the directions from the current location to the vehicle/departure area.

Other arrangements which result in the generation of data regarding the location of the identifier at a particular time also form part of the present invention.

In a development of the system, local readers (i.e. devices capable of interacting with identifiers) may be provided in addition to the system's network of sensors. These local readers may be embodied in fixed, portable or mobile devices ranging from consumer products such as mobile telephones or personal organisers to cheap devices specifically produced for this purpose. The local readers may be connected to the system through fixed lines or wirelessly.

The local readers could be located at the entrance of cinemas, close to shop tills, on shelves or at any other location, or carried by passengers/crew as described above.

Such local readers do not form part of the core system infrastructure, but may be provided as part of an extended system infrastructure according to performance and security considerations in the system design.

The local readers interface with the core system using a defined protocol and can be updated regularly with data from the core system such as departure times, locations and other such information. Thus they can take into account variations in operational conditions and, for example if the local reader has display capability, adjust the information displayed on it.

The local readers may be owned by passengers/crews or by businesses located inside the facilities (e.g. the airport terminal) and can provide both businesses and passengers/crews with additional benefits. The local readers may be "independent" sensors in that they contain local processing power to provide their owner or user with information, such as the time left before departure, through the interrogation of data on the passenger/crew's identifier. For example, they may show the scheduled departure time which may be augmented by a cross-check with the system's updated schedule information. By having local processing power, the local readers do not draw significantly on the processing power of the core system infrastructure.

In another embodiment, the local reader could inform the passenger/crew whether or not they have the time to take advantage of a locally offered service such as buying a special offer, going to a business lounge, going to a cinema, using a swimming pool or fitness centre. This information may be provided or calculated by a local reader carried by the passenger or crew, or by a local reader provided or operated by the service provider.

In a further embodiment, the local reader could provide the system with statistics on passenger movements in their sensing range. Such statistics could be used, for example, by business managers to tailor their service offerings to take account of the time that passengers/crews have available in their area.

Through the use of all the sensors and local readers to provide statistics to the system, such local data can be available at a fraction of the cost of having sensors throughout the whole facility, especially if the local readers are either owned by passengers/crews, for example as part of mobile devices that they own, or are provided by local businesses or areas in the facility because it provides them with better customer/user intelligence and offers corresponding benefits to those businesses.

Such a service would enable the creation of cinemas and other forms of entertainment and businesses providing activities for passengers/crew which are not currently possible due to passenger/crew uncertainty over the amount of time they have available. Passengers and crew would feel more comfortable about paying for a service or using a service (e.g. business lounges in an airport embodiment) which they feel they have the time to take. Such businesses could also operate on price elastic/demand management using statistical or real-time data.

Arrangements such as those described in the preceding paragraphs would be especially useful for so-called "hub and spoke flights" (e.g. long-distance international flights or international flights combined with local connections) during which passengers/crews often have significant time to spend in airport facilities between connections.

In a further embodiment, local readers carried by passengers/crew may provide the passengers/crew with a warning when their tagged luggage arrives on the conveyor belt or when they leave the luggage conveyor belt area where they are supposed to collect their luggage from upon arrival at their destination. Alternatively, local readers may be carried by crew who are located in the luggage reclaim area in the arrival terminal or may be static units placed in that area.

This embodiment offers the passengers/crew the ability to relax as they do not have to stand around the luggage reclaim belts looking for their luggage. This embodiment may also decrease the chance of luggage being lost in the arrival area through theft, through forgetting that luggage needs to be collected, through confusion with someone else's luggage or for other reasons.

The system, either in its basic form, or in conjunction with the local readers described above, may also be used to collect data for statistics such as whether: there is a particular profile of people arriving late at a departure area; it is always the same people who arrive late at the gate; there is a particular profile of people who only move to the next zone when an alert is generated; etc.. These statistics may be used to allow operators to take preventative action, for example by adjusting the time references of required incidents created for such people accordingly, or by targeted marketing.

In addition to the above statistics, the system may also collect data for analysis which can be used to determine trends in passenger movement and type of passengers over the course of a day, week, or year. The results of this analysis for previous days, weeks or years is used when determining the time (and/or place) references of the required incidents which are created for current users of the system to take account of busy periods. Such analyses can provide additional insights into how passengers behave when analysed in conjunction with departure schedules, time of year and other operating conditions inside, outside of the facility and with the transportation assets and operator of such transportation assets.

In a further development, the sensors and identifiers which are part of the core system are arranged to address the issue that, when passengers/crew approach areas where sensors are used to determine whether the passenger/crew has progressed to a different zone, this determination is not always a trivial exercise. For example, passengers/crews may pass by the sensor but stay in their current zone or go slightly into the next zone and then return to the previous zone. Desirably, the sensors can therefore correctly determine where the identifier associated with the sensed passenger/crew member is.

One arrangement that addresses this issue is to use a multitude of sensors which are arranged in such a way that they provide an unconditional zone determination. An embodiment of this arrangement, which is particularly useful where the passengers/crew have to pass through a "choke point" between zones, includes two or more rows of sensors. One line of sensors is located at the start of the choke point, and a further row is located at the end of the choke point. Passengers who have passed through or are close to the first row are defined as 'possibly in transit between two zones', whilst those who have reached the other row at the end of the choke point are deemed to have reached the new zone.

In an alternative arrangement, sensors can determine passenger locations within their detection range by sending a signal to the identifier and measuring the time that it takes for the signal to travel between the sensor and identifier or for a reply to be received from the identifier that it has received that signal. The time for the signal to reach the identifier is proportional to the distance between the sensor and the identifier. Use can also be made of the Doppler effect to determine the direction of movement of the identifier.

Rather than using rows of sensors such as the first arrangement described above, simpler arrangements of rows and single sensors with such timing functionality can then fully define the location of the passenger/crew with fewer sensors. Sensors which are directional in their nature, their field of detection providing a line of sight detection over several metres rather than a spherical or disc-like emission volume, can also be used to determine passenger locations.

The use of sensors with timing functionality can thus determine the transfer of passengers/crew from one zone to the next. As the passenger/crew approaches the sensor, the time measured by the sensor associated with the distance between the passenger/crew and sensor will decrease over time and go through a minimum at the point of closest approach before increasing again as the passenger goes away from the sensor. Thus one sensor may be enough to define whether or not the passenger and/or crew has passed into the next zone.

The above approaches may be combined with physical signs and/or structures present at choke points, such as a corridor or line on the floor which ensures that passengers can only travel in a particular direction combined with one way signs which prevent or discourage passengers from going back where they came from.

The above considerations also apply to luggage, particularly in situations where it is not on placed on a flow system such as conveyor belt, but is transported by other systems which do not necessarily behave in simple and predictable ways, such as trolleys or motorised carts.

The above developments of the sensor(s) and their interaction in the system may be combined with the developments of the identifier described earlier (such as the switching of the information contained on the identifier from one zone to the next as the passenger progresses through zones). This can provide the system with an increased level of confidence that the passenger is in a particular zone, without the need to have a full triangulation of the identifier by sensors placed throughout the facility. This has the advantages that fewer sensors are required and that less data is generated in total by all sensors.

A worked example of an embodiment of the present invention which relates to a (male) passenger preparing to catch an international flight is now described in relation to Figures 1 to 3.

The term "system" will be used to refer to a system operating according to the present invention. The system is implemented on a dedicated computer system 50, which is connected to a data storage means 55 via a network 57.

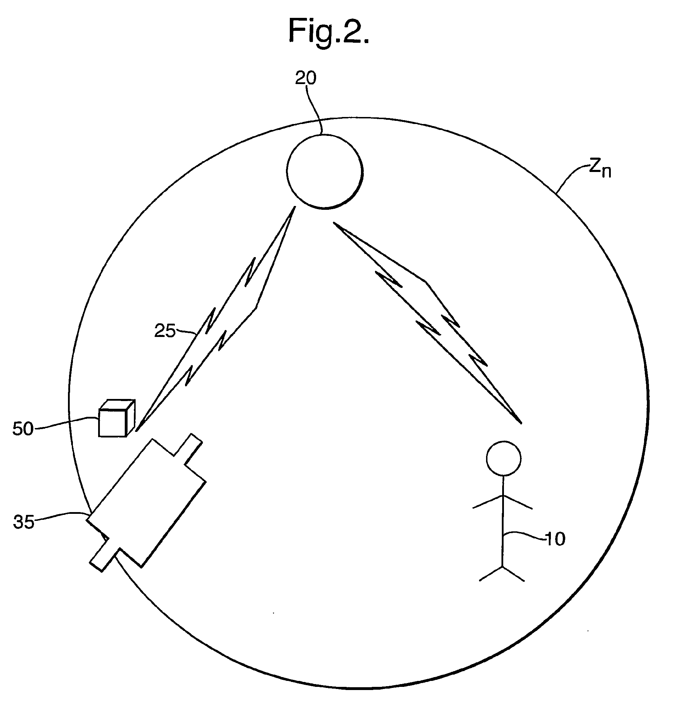

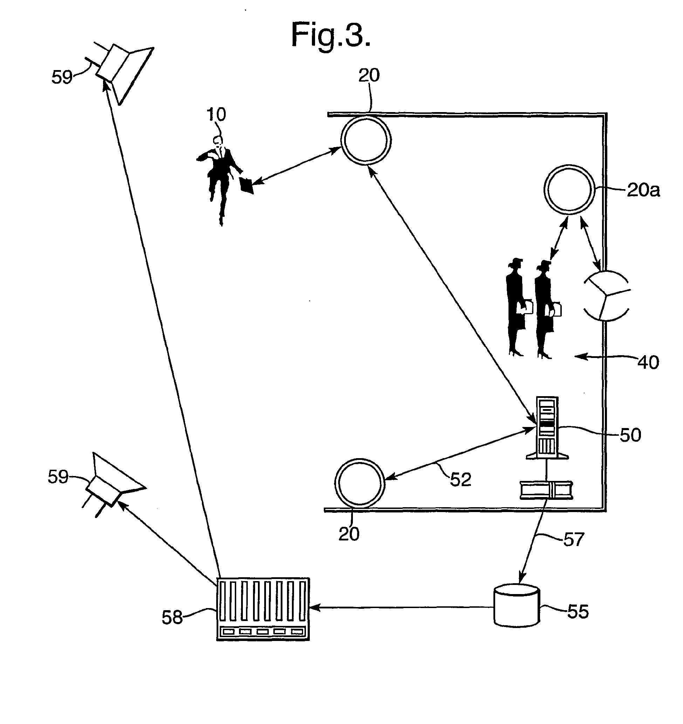

The tags/sensors used in the airport are RFID based, although other systems may be used such as barcodes printed on the passenger's boarding card and barcode readers.
1. The passenger 10 receives an automatic SMS message from the system prompting/reminding him that he has to leave in order to catch the plane scheduled to leave from the departure area at the time printed on his flight ticket. The message is issued to his mobile phone. In all instances, an itinerary can be issued to the passenger so that he has an improved chance of reaching the airport in good time. This itinerary may be linked with a GPS system which gives precise directions to the airport or using coarse zones defined by mobile phone tracks which identify the passenger's position within coarse mobile phone zones (so called "cells").
   Additional messages could be issued during the passenger's journey to the airport with the assistance of GPS/mobile phone tracking and/or generic tracking devices such as wOzNet™. The passenger could also be linked to, or provided with data from, third party traffic advice systems and receive updates from the system based on the input from these systems.
   The crew of the aircraft can be handled by the system in a similar way to that described here for the passengers, in that they also have to reach the vehicle at a particular time to ensure its prompt departure. This time may be the same as or different from the corresponding time for passengers and may vary for crew members with different responsibilities.
   If the system knows the starting point of the passenger's journey, this message is issued so as to reach the passenger before the maximum anticipated time to departure, which may be based on the time needed to get through all the zones to the departure area according to available operational data. In this way, if there are delays occurring at the airport terminal, the passenger can be advised to leave earlier than they might otherwise have done.
   If the system does not know the passenger's starting point, this message is issued as a general reminder in advance of departure that the passenger should be within a particular range of the airport, or within a particular travelling time of the airport.
2. The passenger 10 arrives at the airport with luggage.
3. The passenger 10 checks in at a check-in desk 35, which is located in the first zone which has sensors 20 (if the system has allocated one or more zones to the area outside the airport for the purposes of step 1. above, this will not necessarily be the first zone of the system that the passenger 10 passes through).
   Staff at the check-in desk 35 issue the passenger with an embarkation ticket or boarding card to which an RFID tag is securely attached. Passengers are accustomed to keeping this item securely with them at all times prior to boarding the aircraft as it is the only means by which he can board the plane. The RFID is encoded with a number or code associated with the passenger's personal and trip details. The system records these details on data storage means 55, which may happen as a direct consequence of the checking-in procedure, for example by linking the check-in system to the network 57.
   The increasing use of "e-tickets" can mean that the boarding card is issued later in the process. However, the same principles apply. Likewise, the passenger may chose to check-in with an automatic check-in machine, in which case the boarding card issued by the machine has an RFID which is encoded by the machine.
   Alternatively the RFID issued to the passenger may be attached to other items or to a tamper proof bracelet such as those issued at large public events. However, association with the boarding cards or embarkation tickets that passengers are used to receiving and looking after may help to reduce any passenger opposition to the system.
   If the passenger has luggage, a further RFID tag is placed on the luggage (in addition to the usual bar codes etc.), which is also encoded with a number or code associated with the passenger's personal and trip details. The system records these details, including the association between the luggage and the passenger.
4. The system creates in data storage means 55 a number of required incidents, each having a place reference and a time reference associated with it. The time reference of each required incident is based on the scheduled departure time of the flight and the distance to the gate area. The exact time reference for each required incident may be set using other data, for example regarding local operating conditions such as delays, or based on the passenger's ticket type.
5. The passenger 10 proceeds to passport control 30. The area of passport control is set up as zone Z1 and has a plurality of RFID sensors 20. The sensors 20 may communicate with the computer system 50 wirelessly (25 in Figure 2) or through a network (52 in Figure 3). The system can therefore check that the passenger 10 has entered the passport control zone Z1 in good time to allow him to reach the relevant gate/departure area 40 in time. Since this passport control 30 may be a choke point in the journey of passengers, i.e. all passengers travelling to all departure areas have to travel through this zone, the system may also monitor the progress of passengers through the zone Z1 to determine local operating conditions and whether it is necessary to allow more time for future passengers. According to this information, the system may change the time references associated with required incidents that have the passport control zone Z1 as associated place references.
   The presence of the passenger 10 in the passport control zone Z1, or more particularly of the RFID associated with them, is detected by the sensors 20, which generate a match which corresponds to a required incident, provided that the passport control zone was the associated place reference for a required incident associated with that passenger.
   In addition, a plurality of passive infra-red detectors (not shown) are positioned to detect each person who passes through passport control zone Z1. A sensor 20 is arranged in conjunction with each passive infra-red detector to detect the identifier carried by each such person. The infra-red detectors and the corresponding sensors 20 are connected to a sub-system which checks that for each person detected by the infra-red detector, a corresponding identifier is detected by the sensor 20. If a corresponding identifier is not detected, then the sub-system raises an alert, for example by notifying staff in the zone, who can check why the person does not have an identifier with them.
   The sensors in question may form part of the overall arrangement of sensors in the zone or may be dedicated to this particular purpose.
   If the passenger 10 has failed to arrive by the time reference of the required incident associated with them and having the passport control zone as its associated place reference, the system generates an alert. This alert may prompt the facilities operator to make a call for the passenger, or may make this call automatically through an automated voice system 58 and/or using other broadcasting means 59 or personal messaging systems, such as SMS.
6. The procedures associated with step 5 above are repeated for other zones in the airport, particularly at other choke points that the passenger 10 has to pass through to reach the departure area 40.
7. If the passenger has luggage, similar zones are set up to check that the luggage has reached the facilities operator, has been security checked, etc. by a given location and time in the process, in order to ensure timely delivery to the aircraft for loading. If the luggage has failed to reach a particular zone in the process by the time reference associated with a required incident for that zone, then an alert is generated by the system, which may prompt the facilities operator to check on the progress of the luggage, or to increase its priority.
8. The passenger 10 arrives at the departure area 40. An RFID sensor 20a detects the arrival of the passenger 10 in the departure area and generates a match which corresponds with the final incident (assuming that the time reference associated with the final incident has not already passed).
Another RFID sensor (not shown) detects the arrival of the passenger's luggage at the plane (depending on the range/sensitivity/location of these sensors, they may be the same). If the passenger fails to arrive in the departure area before the time reference associated with the final incident, then an alert is generated as in step 5. above.

If the luggage fails to arrive before departure of the plane, then an alert is generated which informs the vehicle operator of this fact, allowing them to keep the passenger informed and updated, and to make alternative carriage arrangements.

In addition, if the passenger is detected leaving the departure area after the time reference of the final incident, an alert can be generated which asks the passenger to return to the gate immediately.

The present invention can equally be used in an arrival situation, again with particular application to transport systems (e.g. the arrivals area of an airport), for example to match passengers and luggage at the luggage reclaim area (which would function as the "destination" for such as system) and alert facility and/or vehicle operator staff or the passenger if there is a problem with any item, or in order to inform the same people of the ultimate location of the luggage. The system could also cause display of the owner details of each item of luggage that is added to the conveyor belt in the arrivals area.

The present invention finds applications in other systems which lend themselves to a discretised approach of time/zone integration towards a destination where it can be anticipated that failure of an entity to arrive by a specified time will cause consequential process failure. Systems and methods which implement the above invention in these areas can be readily devised according to the principles described above. In particular, whilst the embodiments have referred to civilian examples, military organisations are increasingly moving towards distributed global/rapid deployment operations combined with "just in time" systems for supply of hardware and equipment, which may be handled by outsourced contracts. The matching of passengers (soldiers) and luggage (assigned equipment) as provided for by embodiments of the present invention will have increased importance. The principles of the invention could be used to determine kit preparation and readiness in military or police applications prior to boarding any transport means in order to ensure delivery of the full individual and equipment capability on the field of battle in a timely manner, and reducing or preventing delays resulting from late arrival of either equipment or personnel.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A method of assisting the passage of an entity (10), the entity being a person, through successive zones (Zn to Z1) to a destination (40), including the steps of:
associating an identifier with said entity;
creating a plurality of required incidents for said entity, each required incident having a place reference and a time reference associated with it, the required incidents including a final incident for which the place reference is the destination and the time reference is a predetermined time;
at intervals, detecting the presence of said entity in one of said zones and the time of said presence, thereby generating a match;
registering correspondences between the matches thus-generated and said required incidents; and
generating an alert for the entity when the time reference for a required incident is reached and that incident does not have a corresponding match.

2. A method according to claim 1 wherein the alert is directed to and delivered to the person.

3. A method according to claim 1 or claim 2 wherein a plurality of said zones (Zn to Z1) are areas within a travel interchange.

4. A method according to claim 3 wherein the travel interchange is any one the group comprising an airport, a shipping port, a bus station or a railway station.

5. A method according to any one of the previous claims, wherein the destination (40) is a departure gate.

6. A method according to any one of claims 3 to 5 wherein at least one zone is outside the interchange.

7. A method according to any one of the previous claims, wherein the identifier is a wireless identification tag.

8. A method according to claim 7 wherein the tag is a passive tag and is energised by a transmitted signal.

9. A method according to any one of the previous claims wherein there are a plurality of entities, including at least one person, and at least a pair of those entities are associated with each other .

10. A method according to claim 9 wherein the pair of entities comprise an item of luggage and a person.

11. A method according to any one of the previous claims wherein the step of generating an alert includes broadcasting a message.

12. A method according to any one of the previous-claims wherein the step of generating an alert includes sending an electronic message.

13. A method according to claim 12 wherein the electronic message is one or more of the group comprising an e-mail, a text message (SMS) or multi-media message (MMS) to a mobile phone, a voice message and a pager message.

14. A method according to any one of the previous claims wherein the step of generating the alert uses stored details about the entity.

15. A method according to any one of the previous claims, further including the step of adjusting the time reference of required incidents in response to a change in local conditions.

16. A method according to any one of the previous claims wherein the step of creating a plurality of required incidents creates the time references for those required incidents based on data about the entity.

17. A method according to any one of the preceding claims wherein at least one of the required incidents also includes data about the entity with which it is associated.

18. A method according to any one of the preceding claims further including the step of storing information regarding said required incidents on said identifier.

19. A method according to any one of the preceding claims further including the step of storing information regarding the entity on said identifier.

20. A method according to claim 18 or claim 19 further including the step of updating the information stored on the identifier as the entity passes through said zones.

21. A method according to any one of the preceding claims wherein the step of detecting is only carried out at defined locations.

22. A method according to claim 21 wherein the defined locations comprise one or more of the group comprising a check-in, a passport control, a metal detector, an X-ray machine and a departure gate.

23. A method according to claim 22 wherein the defined locations comprise, in sequence, a check-in, a passport control, a metal detector and a departure gate.

24. A method according to any one of claims 21 to 23 wherein at least one of said defined locations is an area through which substantially every entity must pass in order to move between zones.

25. A method according to claim 24 wherein at least one of said defined locations is an area through which every entity must pass in order to reach a destination.

26. A method according to anyone of the preceding claims wherein the step of detecting is carried out at locations comprising any one of the group comprising a retail entrance or exit, a toilet or rest-room entrance and a restricted area entrance.

27. A method according to claim 26 wherein data regarding usage of the facility where the step of detecting is carried out is stored and analysed.

28. A method according to any one of the preceding claims wherein the method comprises the further steps of:
setting a limit for the number of people permitted in at least one of said zones;
counting the number of people in said zone;
comparing said number to said limit; and
creating a signal when the number exceeds said limit or when the number approaches said limit to enable restriction of the number of people moving into said zone.

29. A method according to any one of the preceding claims wherein the method comprises the further steps of:
setting a limit for the number of people permitted in at least one of said zones;
counting the number of people in said zone;
comparing the number to said limit; and
generating an alert when the number exceeds said limit or when the number approaches said limit to increase the number of people moving out of said zone.

30. A method according to claim 28 or claim 29, further including the step of adjusting said limit over the course of time.

31. A method according to any one of the preceding claims wherein the step of detecting is only carried out in particular areas at predetermined times.

32. A method according to any one of the preceding claims further including the step of analysing said matches.

33. A method according to claim 32 further including the step of adjusting one or more of said required incidents according to the outcome of said analysis.

34. A method according to claim 33 wherein the step of adjusting includes adjusting the time reference of one or more of said required incidents according to the outcome of said analysis.

35. A method according to claim 33 or claim 34 wherein the step of adjusting includes adjusting the place reference of one or more of said required incidents according to the outcome of said analysis.

36. A method according to any one of the preceding claims further including the step of detecting the passage of a person through a defined area using secondary detection means and matching each such passage with a detected passage of an identifier through the same area, wherein when the passage of a person is detected without a corresponding detected passage of an identifier, an alert is generated.

37. A method according to claim 36 wherein the secondary detection means is any one of the group comprising an infra-red detector, a video sensor a light beam or a mechanical sensor.

38. A system for assisting the passage of an entity (10), the entity being a person, through a plurality of successive zones (Z1 to Zn) to a destination (40), the system including:
an identifier for said entity;
storage means (55) for storing a plurality of required incidents for said entity, each required incident having a place reference and a time reference associated with it, the required incidents including a final incident for which the place reference is the destination and the time reference is a predetermined time;
detection means (20) for detecting, at intervals, the presence of said entity in one of said zones (Z1 to Zn) and the time of said presence, thereby generating a match;
means (50) for registering correspondences between the matches thus-generated and said required incidents; and
alerting means (58, 59) for generating an alert for the entity when the time reference for a required incident is reached and that incident does not have a corresponding match.

39. A system according to claim 38 wherein the alerting means generates an alert that is directed to and delivered to the person.

40. A system according to claim 38 or claim 39 wherein a plurality of said zones (Z1 to Zn) are areas within a transportation travel interchange.

41. A system according to any one of claims 38 to 40 wherein the destination (40) is the departure gate of a travel interchange.

42. A system according to claim 40 or 41 wherein at least one zone is outside the interchange.

43. A system according to any one of claims 38 to 42 wherein the identifier is a wireless identification tag.

44. A system according to claim 43 wherein the tag is a passive tag and is energised by a transmitted signal.

45. A system according to claim 43 or 44 wherein the detecting means (20) are radio sensors.

46. A system according to any one of claims 38 to 45 wherein the detecting means (20) are also able to determine the separation between the detecting means and an identifier.

47. A system according to any one of claims 38 to 46 wherein the detecting means can determine the direction of the identifier from the detecting means.

48. A system according to any one of claims 38 to 47 wherein a plurality of sensors are arranged close to boundary between two zones in such a way as to provide unconditional determination of which zone the identifier is in.

49. A system according to claim 48 wherein two rows of sensors are provided, one on either side of the boundary.

50. A system according to claim 48 or claim 49 wherein further physical arrangements are provided which encourage or force the entity to move in a particular direction, or along a particular path between the zones, or prevent return from a successive zone to an earlier zone.

51. A system according to any one of claims 48 to 50 wherein at least one of said zones is a choke point.

52. A system according to any one of claims 38 to 51 wherein the alerting means includes a broadcast system (59).

53. A system according to any one of claims 38 to 52 wherein the alerting means includes an electronic messaging system.

54. A system according to any one of claims 38 to 53 wherein the storage means (55) is part of a digital computer.

55. A system according to any one of claims 38 to 54 wherein the identifier is capable of storing information.

56. A system according to claim 55 wherein the information stored on said identifier is capable of being updated by interaction with one or more of said detection means.

57. A system according to any one of claims 38 to 56 wherein at least one detecting means is located at a choke point through which substantially every entity has to pass.

58. A system according to claim 57 wherein at least one detecting means is located at a choke point through which every entity has to pass.

59. A system according to any one of claims 38 to 58 further including means for altering properties of said required incidents depending on inputs to the system.

60. A system according to any one of claims 38 to 59 further including secondary detection means for detecting the passage of a person through a defined area; means for registering correspondence between each such passage and a passage of an identifier detected by detection means (20); and alerting means for generating an alert when the passage of a person is detected by said secondary detection means without a corresponding passage of an identifier being detected.

61. A system according to claim 60 wherein said secondary detection means is any one of the group comprising an infra-red detector, a video sensor, a light beam or a mechanical sensor.

62. A system according to any one of claims 38 to 61 further comprising:
storage means for storing a limit value for the number of people permitted in at least one of said zones; and
means for monitoring the total number of people in said zone; for comparing said total number to said limit value; and for creating a signal which restricts the number of people moving into said zone when the total number exceeds said limit, or when the total number approaches said limit.

63. A system according to any one of claims 38 to 62 further comprising:
storage means for storing a limit value for the number of people permitted in at least one of said zones; and
means for monitoring the total number of people in said zone; for comparing said total number to said limit value; and for generating an alert to increase the number of people moving out of said zone when the total number exceeds said limit, or when the total number approaches said limit.

64. A system according to claim 62 or claim 63, wherein the limit is adjusted over time.

65. A computer program which, when executed by a computer, performs the method of any one of claims 1 to 37.

66. A computer program product containing a computer program according to claim 65.

## Patentansprüche

1. Verfahren zur Unterstützung beim Durchgang einer Entität (40) durch aufeinanderfolgende Zonen (Z1 bis Zn) zu einem Ziel (40), wobei die Entität eine Person ist, umfassend folgende Schritte:
das Zuordnen einer Kennzeichnungseinheit zu der Entität;
das Erstellen einer Vielzahl erforderlicher Ereignisse für die Entität, wobei jedes erforderliches Ereignis eine diesem zugeordnete Orts- und Zeitreferenz aufweist, wobei die erforderlichen Ereignisse ein abschließendes Ereignis umfassen, für welches die Ortsreferenz das Ziel und die Zeitreferenz eine vorbestimmte Zeit ist;
in zeitlichen Abständen das Detektieren der Anwesenheit der Entität in einer der Zonen sowie die Dauer dieser Anwesenheit, wodurch eine Entsprechung generiert wird;
das Registrieren von Übereinstimmungen zwischen den auf diese Weise generierten Entsprechungen und den erforderlichen Ereignissen; und
das Erzeugen eines Alarms für die Entität, wenn die Zeitreferenz für ein erforderliches Ereignis erreicht wird und dieses Ereignis keine diesbezügliche Entsprechung aufweist.

2. Verfahren nach Anspruch 1, worin der Alarm auf die Person gerichtet ist und an die Person abgegeben wird.

3. Verfahren nach Anspruch 1 oder 2, worin eine Vielzahl der Zonen (Z1 bis Zn) Flächen innerhalb eines Reiseknotenpunkts sind.

4. Verfahren nach Anspruch 3, worin der Reiseknotenpunkt aus der aus einem Flughafen, einem Hafen, einem Busbahnhof oder einem Bahnhof bestehenden Gruppe ausgewählt ist.

5. Verfahren nach einem der vorangegangenen Ansprüche, worin das Ziel (40) ein Flugsteig ist.

6. Verfahren nach einem der Ansprüche 3 bis 5, worin zumindest eine der Zonen außerhalb des Knotenpunkts liegt.

7. Verfahren nach einem der vorangegangenen Ansprüche, worin die Kennzeichnungseinheit eine drahtlose Identifizierungsmarkierung ist.

8. Verfahren nach Anspruch 7, worin die Markierung eine passive Markierung ist und durch ein übertragenes Signal gespeist wird.

9. Verfahren nach einem der vorangegangenen Ansprüche, worin eine Vielzahl an Entitäten, einschließlich zumindest einer Person, vorhanden ist und zumindest ein Paar dieser Entitäten einander zugeordnet sind.

10. Verfahren nach Anspruch 9, worin das Paar der Entitäten ein Gepäcksstück und eine Person umfasst.

11. Verfahren nach einem der vorangegangenen Ansprüche, worin der Schritt des Erzeugens eines Alarms das Senden einer Nachricht umfasst.

12. Verfahren nach einem der vorangegangenen Ansprüche, worin der Schritt des Erzeugens eines Alarms das Senden einer elektronischen Nachricht umfasst.

13. Verfahren nach Anspruch 12, worin die elektronische Nachricht eine oder mehrere der aus der aus E-Mail, Textnachricht (SMS) oder Multimedianachricht (MMS) an ein Mobiltelefon, Sprachnachricht und Pagernachricht bestehenden Gruppe ausgewählt ist.

14. Verfahren nach einem der vorangegangenen Ansprüche, worin der Schritt des Erzeugens des Alarms gespeicherte Details über die Entität verwendet.

15. Verfahren nach einem der vorangegangenen Ansprüche, ferner umfassend den Schritt des Anpassens der Zeitreferenz der erforderlichen Ereignisse als Reaktion auf eine Veränderung der örtlichen Bedingungen.

16. Verfahren nach einem der vorangegangenen Ansprüche, worin der Schritt des Erstellens einer Vielzahl an erforderlichen Ereignissen die Zeitreferenzen für diese erforderlichen Ereignisse basierend auf Daten über die Entität erzeugt.

17. Verfahren nach einem der vorangegangenen Ansprüche, worin zumindest eines der erforderlichen Ereignisse auch Daten über die Entität umfasst, welche diesem zugeordnet ist.

18. Verfahren nach einem der vorangegangenen Ansprüche, ferner umfassend den Schritt des Speicherns von Informationen in Bezug auf die erforderlichen Ereignisse auf der Kennzeichnungseinheit.

19. Verfahren nach einem der vorangegangenen Ansprüche, ferner umfassend den Schritt des Speicherns von Informationen in Bezug auf die Entität auf der Kennzeichnungseinheit.

20. Verfahren nach Anspruch 18 oder 19, ferner umfassend den Schritt des Aktualisierens der auf der Kennzeichnungseinheit gespeicherten Daten während die Entität die Zonen durchläuft.

21. Verfahren nach einem der vorangegangenen Ansprüche, worin der Schritt des Detektierens nur an definierten Orten durchgeführt wird.

22. Verfahren nach Anspruch 21, worin die definierten Orte einen oder mehrere Orte aus der aus Check-in-Bereich, Passkontrolle, Metalldetektor, Röntgenapparat und Flugsteig bestehenden Gruppe umfassen.

23. Verfahren nach Anspruch 22, worin die definierten Orte aufeinanderfolgend Check-in-Bereich, Passkontrolle, Metalldetektor und Flugsteig umfassen.

24. Verfahren nach einem der Ansprüche 21 bis 23, worin zumindest einer der definierten Orte ein Bereich ist, den im Wesentlichen jede Entität passieren muss, um sich zwischen den Zonen zu bewegen.

25. Verfahren nach Anspruch 24, worin zumindest einer der definierten Orte in einem Bereich liegt, den jede Entität passieren muss, um ein Ziel zu erreichen.

26. Verfahren nach einem der vorangegangenen Ansprüche, worin der Schritt des Detektierens an Orten durchgeführt wird, die aus der aus einem Geschäftseingang oder -ausgang, einem Toiletten- oder WC-Eingang und einem Eingang zu einem Bereich mit beschränktem Zugang bestehenden Gruppe ausgewählt sind.

27. Verfahren nach Anspruch 26, worin Daten in Bezug auf die Verwendung der Einrichtung, bei der der Schritt des Detektierens durchgeführt wird, gespeichert und analysiert werden.

28. Verfahren nach einem der vorangegangenen Ansprüche, worin das Verfahren folgende weitere Schritte umfasst:
das Festlegen eines Grenzwerts der Anzahl der Menschen, die in zumindest einer der Zonen zugelassen sind;
das Zählen der Anzahl der Menschen in dieser Zone;
das Vergleichen dieser Anzahl mit dem Grenzwert; und
das Erzeugen eines Signals, wenn die Anzahl den Grenzwert übersteigt oder wenn sich die Anzahl diesem Grenzwert nähert, um eine Beschränkung der Anzahl der Menschen, die sich in die Zone begeben, zu ermöglichen.

29. Verfahren nach einem der vorangegangenen Ansprüche, worin das Verfahren folgende weitere Schritte umfasst:
das Festlegen eines Grenzwerts der Anzahl der Menschen, die in zumindest einer der Zonen zugelassen sind;
das Zählen der Anzahl der Menschen in dieser Zone;
das Vergleichen der Anzahl mit dem Grenzwert; und
das Erzeugen eines Alarms, wenn die Anzahl der Menschen diesen Grenzwert übersteigt oder sich die Anzahl diesem Grenzwert nähert, um die Anzahl der Menschen, die sich aus der Zone hinausbewegen, zu steigern.

30. Verfahren nach Anspruch 28 oder 29, ferner umfassend den Schritt des Anpassens des Grenzwerts im Verlauf der Zeit.

31. Verfahren nach einem der vorangegangenen Ansprüche, worin der Schritt des Detektierens nur in bestimmten Bereichen zu vorbestimmten Zeitpunkten durchgeführt wird.

32. Verfahren nach einem der vorangegangenen Ansprüche, ferner umfassend den Schritt des Analysierens der Entsprechungen.

33. Verfahren nach Anspruch 32, ferner umfassend den Schritt des Anpassens eines oder mehrerer der erforderlichen Ereignisse gemäß dem Ergebnis der Analyse.

34. Verfahren nach Anspruch 33, worin der Schritt des Anpassens das Anpassen der Zeitreferenz eines oder mehrerer der erforderlichen Ereignisse gemäß dem Ergebnis der Analyse umfasst.

35. Verfahren nach Anspruch 33 oder 34, worin der Schritt des Anpassens das Anpassen der Ortsreferenz eines oder mehrerer der erforderlichen Ereignisse gemäß dem Ergebnis der Analyse umfasst.

36. Verfahren nach einem der vorangegangenen Ansprüche, ferner umfassend den Schritt des Detektierens des Durchgangs einer Person durch einen definierten Bereich unter Einsatz eines sekundären Detektionsmittels und das Übereinstimmen jedes dieser Durchgänge mit einem detektierten Durchgang einer Kennzeichnungseinheit durch denselben Bereich, wobei ein Alarm erzeugt wird, wenn der Durchgang einer Person ohne entsprechenden Durchgang einer Kennzeichnungseinheit detektiert wird.

37. Verfahren nach Anspruch 36, worin das sekundäre Detektionsmittel aus der aus Infrarotdetektor, Videosensor, Lichtstrahl oder mechanischem Sensor bestehenden Gruppe ausgewählt ist.

38. System zur Unterstützung beim Durchgang einer Entität (10) durch aufeinander folgende Zonen (Z1 bis Zn) zu einem Ziel (40), wobei die Entität eine Person ist, wobei das System umfasst:
eine Kennzeichnungseinheit für die Entität;
ein Speichermittel (55) zum Speichern einer Vielzahl erforderlicher Ereignisse für die Entität, wobei jedes erforderliche Ereignis eine diesem zugeordnete Zeit- und Ortsreferenz aufweist, wobei die erforderlichen Ereignisse ein abschließendes Ereignis umfassen, dessen Ortsreferenz das Ziel und dessen Zeitreferenz eine vorbestimmte Zeit ist;
ein Detektionsmittel (20), um in zeitlichen Abständen die Anwesenheit der Entität in einer der Zonen (Z1 bis Zn) und die Dauer dieser Anwesenheit zu detektieren, wodurch eine Entsprechung generiert wird; und
ein Alarmmittel (58, 59) zum Erzeugen eines Alarms für die Entität, wenn die Zeitreferenz für ein erforderliches Ereignis erreicht wird und dieses Ereignis keine diesbezügliche Entsprechung aufweist.

39. System nach Anspruch 38, worin das Alarmmittel einen Alarm erzeugt, der auf die Person gerichtet ist und an diese übermittelt wird.

40. System nach Anspruch 38 oder 39, worin eine Vielzahl der Zonen (Z1 bis Zn) Bereiche innerhalb eines Transport-Reiseknotenpunkts sind.

41. System nach einem der Ansprüche 38 bis 40, worin das Ziel (40) ein Flugsteig eines Reiseknotenpunkts ist.

42. System nach Anspruch 40 oder 41, worin zumindest eine der Zonen außerhalb des Knotenpunkts liegt.

43. System nach einem der Ansprüche 38 bis 42, worin die Kennzeichnungseinheit eine drahtlose Identifizierungsmarkierung ist.

44. System nach Anspruch 43, worin die Markierung eine passive Markierung ist und durch ein übertragenes Signal gespeist wird.

45. System nach Anspruch 43 oder 44, worin das Detektionsmittel (20) durch Funksensoren gebildet ist.

46. System nach einem der Ansprüche 38 bis 45, worin das Detektionsmittel (20) auch in der Lage ist, die Trennung des Detektionsmittels von einer Kennzeichnungseinheit festzustellen.

47. System nach einem der Ansprüche 38 bis 46, worin das Detektionsmittel die Richtung der Kennzeichnungseinheit von dem Detektionsmittel bestimmen kann.

48. System nach einem der Ansprüche 38 bis 47, worin eine Vielzahl an Sensoren im Bereich der Grenze zwischen zwei Zonen derart angeordnet ist, dass eine eindeutige Bestimmung durchgeführt kann, in welchem Bereich sich die Kennzeichnungseinheit befindet.

49. System nach Anspruch 48, worin zwei Sensorreihen bereitgestellt sind, eine auf jeder Seite der Grenze.

50. System nach Anspruch 48 oder 49, worin weitere physische Anordnungen bereitgestellt sind, die die Entität veranlassen oder zwingen, sich in eine bestimmte Richtung oder entlang eines bestimmten Wegs zwischen den Zonen zu bewegen, oder die eine Rückkehr von einer nachfolgenden Zone in einer davor liegende Zone verhindern.

51. System nach einem der Ansprüche 48 bis 50, worin zumindest eine dieser Zonen ein Engpass ist.

52. System nach einem der Ansprüche 38 bis 51, worin das Alarmmittel ein Übertragungssystem (59) umfasst.

53. System nach einem der Ansprüche 38 bis 52, worin das Alarmmittel ein elektronisches Nachrichtenübertragungssystem umfasst.

54. System nach einem der Ansprüche 38 bis 53, worin das Speichermittel (55) Teil eines digitalen Computers ist.

55. System nach einem der Ansprüche 38 bis 54, worin die Kennzeichnungseinheit in der Lage ist, Informationen zu speichern.

56. System nach Anspruch 55, worin die auf der Kennzeichnungseinheit gespeicherten Informationen durch eine Wechselwirkung mit einem oder mehreren der Detektionsmittel aktualisierbar sind.

57. System nach einem der Ansprüche 38 bis 56, worin zumindest ein Detektionsmittel an einem Engpass angeordnet ist, den im Wesentlichen jede Entität passieren muss.

58. System nach Anspruch 57, worin zumindest ein Detektionsmittel an einem Engpass angeordnet ist, durch den im Wesentlichen jede Entität hindurchtreten muss.

59. System nach einem der Ansprüche 38 bis 58, ferner umfassend Mittel, um die Eigenschaften der erforderlichen Ereignisse in Abhängigkeit von Eingaben in das System zu verändern.

60. System nach einem der Ansprüche 38 bis 59, ferner umfassend ein sekundäres Detektionsmittel zur Detektion des Durchgangs einer Person durch einen definierten Bereich; ein Mittel zum Registrieren der Übereinstimmung zwischen jedem dieser Durchgänge und dem Durchgang einer durch das Detektionsmittel (20) detektierten Kennzeichnungseinheit; sowie ein Alarmmittel zum Erzeugen eines Alarms, wenn durch das sekundäre Detektionsmittel der Durchgang einer Person detektiert wird, ohne dass ein entsprechender Durchgang eine Kennzeichnungseinheit detektiert wird.

61. System nach Anspruch 60, worin das sekundären Detektionsmittel aus der aus Infrarotdetektor, Videosensor, Lichtstrahl oder mechanischem Sensor bestehenden Gruppe ausgewählt ist.

62. System nach einem der Ansprüche 38 bis 61, ferner umfassend:
ein Speichermittel zum Speichern von Grenzwerten für die Anzahl der Menschen, die in zumindest einem der Zonen zugelassen sind; und
ein Mittel zum Überwachen der Gesamtanzahl der Menschen in der Zone; zum Vergleichen der Gesamtanzahl mit dem Grenzwert; und zum Erzeugen eines Signals, das die Anzahl der Menschen beschränkt, die sich in die Zone bewegen, wenn die Gesamtanzahl den Grenzwert überschreitet oder sich diesem nähert.

63. System nach einem der Ansprüche 38 bis 62, ferner umfassend:
ein Speichermittel zum Speichern von Grenzwerten für die Anzahl der Menschen, die in zumindest einer der Zonen zugelassen sind; und
ein Mittel zum Überwachen der Gesamtanzahl der Menschen in der Zone; zum Vergleichen der Gesamtanzahl mit dem Grenzwert; und zum Erzeugen eines Alarms, um die Anzahl der Menschen zu steigern, die sich aus dem Bereich hinausbewegen, wenn die Gesamtanzahl den Grenzwert überschreitet oder sich diesem nähert.

64. System nach Anspruch 62 oder 63, worin der Grenzwert im Verlauf der Zeit angepasst wird.

65. Computerprogramm, das das Verfahren nach einem der Ansprüche 1 bis 37 durchführt, wenn es durch einen Computer ausgeführt wird.

66. Computerprogrammprodukt, das ein Computerprogramm nach Anspruch 65 beinhaltet.

## Revendications

1. Procédé pour aider au passage d'une entité (10), l'entité étant une personne, à travers des zones successives (Zn à Zl) à une destination (40), incluant les étapes de:
associer un identifiant à ladite entité;
créer une pluralité d'incidents requis pour ladite entité, chaque incident requis ayant une référence de lieu et une référence de temps associées à celui-ci, les incidents requis incluant un incident final pour lequel la référence de lieu est la destination et la référence de temps est un temps prédéterminé;
à des intervalles, détecter la présence de ladite entité dans une desdites zones et le temps de ladite présence, en réalisant ainsi un appariement;
enregistrer les correspondances entre les appariements ainsi produits et lesdits incidents requis; et
produire une alerte pour l'entité lorsque la référence de temps pour un incident requis est atteinte et que l'incident ne possède pas un appariement correspondant.

2. Procédé selon la revendication 1, où l'alerte est dirigée vers et délivrée à la personne.

3. Procédé selon la revendication 1 ou la revendication 2, où une pluralité desdites zones (Zn à Zl) sont des zones dans une correspondance de déplacement.

4. Procédé selon la revendication 3, où la correspondance de déplacement est l'une quelconque du groupe comprenant un aéroport, un port d'embarquement, une station de bus ou une station de chemin de fer.

5. Procédé selon l'une quelconque des revendications précédentes, où la destination (40) est une porte d'embarquement.

6. Procédé selon l'une quelconque des revendications 3 à 5, où au moins une zone est à l'extérieur de la correspondance.

7. Procédé selon l'une quelconque des revendications précédentes, où l'identifiant est un repère d'identification sans fil.

8. Procédé selon la revendication 7, où le repère est un repère passif et est excité par un signal transmis.

9. Procédé selon l'une quelconque des revendications précédentes, dans lequel il y a plusieurs entités, incluant au moins une personne, et au moins une paire de ces entités sont associées l'une à l'autre.

10. Procédé selon la revendication 9, où la paire d'entités comprend un article de bagage et une personne.

11. Procédé selon l'une quelconque des revendications précédentes, où l'étape consistant à produire une alerte comprend la diffusion d'un message.

12. Procédé selon l'une quelconque des revendications précédentes, où l'étape consistant à produire une alerte comprend l'émission d'un message électronique.

13. Procédé selon la revendication 12, où le message électronique est un ou plusieurs du groupe comprenant un email, un message texte (SMS) ou un message multi-média (MMS) à un téléphone mobile, un message vocal et une message de téléavertissement.

14. Procédé selon l'une quelconque des revendications précédentes, où l'étape consistant à produire une alerte utilise des détails stockés se rapportant à l'entité.

15. Procédé selon l'une quelconque des revendications précédentes, incluant en outre l'étape consistant à ajuster la référence de temps des incidents requis en réponse à un changement dans les conditions locales.

16. Procédé selon l'une quelconque des revendications précédentes, où l'étape consistant à créer une pluralité d'incidents requis crée les références de temps pour les incidents requis qui sont basés sur des données se rapportant à l'entité.

17. Procédé selon l'une quelconque des revendications précédentes, où au moins un des incidents requis comprend également des données se rapportant à l'entité à laquelle il est associé.

18. Procédé selon l'une quelconque des revendications précédentes, incluant en outre l'étape consistant à stocker des informations concernant lesdits incidents requis sur ledit identifiant.

19. Procédé selon l'une quelconque des revendications précédentes, comprenant en outre l'étape consistant à stocker des informations se rapportant à l'entité sur ledit identifiant.

20. Procédé selon la revendication 18 ou la revendication 19, comprenant en outre l'étape consistant à mettre à jour les informations stockées sur l'identifiant lorsque l'entité passe à travers lesdites zones.

21. Procédé selon l'une quelconque des revendications précédentes, où l'étape de détection est exécutée seulement à des emplacements définis.

22. Procédé selon la revendication 21, où les emplacements définis comprennent un ou plusieurs du groupe comprenant un enregistrement, un contrôle de passeport, un détecteur de métal, une machine à rayon-X et une porte d'embarquement.

23. Procédé selon la revendication 22, où les emplacements définis comprennent, en séquence, un enregistrement, un contrôle de passeport, un détecteur de métal et une porte d'embarquement.

24. Procédé selon l'une quelconque des revendications 21 à 23, dans lequel au moins un desdits emplacements définis est une zone à travers laquelle sensiblement toute l'entité doit passer pour se déplacer entre les zones.

25. Procédé selon la revendication 24, où au moins un desdits emplacements définis est une zone à travers laquelle chaque entité doit passer pour atteindre une destination.

26. Procédé selon l'une quelconque des revendications précédentes, où l'étape de détection est exécutée à des emplacements comprenant un quelconque du groupe comprenant une entrée ou sortie de vente au détail, une entrée de toilette ou de salle de repos et une entrée de zone restreinte.

27. Procédé selon la revendication 26, dans lequel des données concernant l'usage des aménagements où l'étape de détection est exécutée sont stockées et analysées.

28. Procédé selon l'une quelconque des revendications précédentes, où le procédé comprend les autres étapes de:
établir une limite pour le nombre de personnes autorisées dans au moins une desdites zones;
compter le nombre de personnes dans ladite zone;
comparer ledit nombre avec ladite limite; et
créer un signal lorsque le nombre dépasse ladite limite ou lorsque le nombre approche ladite limite pour permettre la limitation du nombre de personnes entrant dans ladite zone.

29. Procédé selon l'une quelconque des revendications précédentes, où le procédé comprend les autres étapes de:
établir une limite pour le nombre de personnes autorisées dans au moins une desdites zones;
compter le nombre de personnes dans ladite zone;
comparer le nombre avec ladite limite; et
déclencher une alerte lorsque le nombre dépasse ladite limite ou lorsque le nombre approche ladite limite pour augmenter le nombre de personnes sortant de ladite zone.

30. Procédé selon la revendication 28 ou la revendication 29, comprenant en outre l'étape consistant à ajuster ladite limite au cours du temps.

31. Procédé selon l'une quelconque des revendications précédentes, où l'étape de détection est exécutée seulement dans des zones particulières à des temps prédéterminés.

32. Procédé selon l'une quelconque des revendications précédentes, comprenant en outre l'étape consistant à analyser lesdits appariements.

33. Procédé selon la revendication 32, comprenant en outre l'étape consistant à ajuster un ou plusieurs desdits incidents requis selon le résultat de ladite analyse.

34. Procédé selon la revendication 33, où l'étape d'ajustement comprend l'ajustement de la référence de temps d'un ou de plusieurs desdits incidents requis en fonction du résultat de ladite analyse.

35. Procédé selon la revendication 33 ou la revendication 34, où l'étape d'ajustement comprend l'ajustement de la référence de lieu d'un ou de plusieurs desdits incidents requis en fonction du résultat de ladite analyse.

36. Procédé selon l'une quelconque des revendications précédentes, comprenant en outre l'étape consistant à détecter le passage d'une personne à travers une zone définie en utilisant des moyens de détection secondaires et à faire correspondre chaque passage avec un passage détecté d'un identifiant à travers la même zone, dans lequel lorsque le passage d'une personne est détecté sans un passage détecté correspondant d'un identifiant, une alerte est déclenchée.

37. Procédé selon la revendication 36, où le moyen de détection secondaire est l'un quelconque du groupe comprenant un détecteur infrarouge, un capteur vidéo, un faisceau de lumière ou un capteur mécanique.

38. Système pour aider au passage d'une entité (10), l'entité étant une personne, à travers une pluralité de zones successives (Z1 à Zn) à une destination (40), le système incluant:
un identifiant pour ladite entité;
un moyen de stockage (55) pour stocker une pluralité d'incidents requis pour ladite entité, chaque incident requis ayant une référence de lieu et une référence de temps associées à celui-ci, les incidents requis incluant un incident final pour lequel la référence de lieu est la destination et la référence de temps est un temps prédéterminé;
un moyen de détection (20) pour détecter, à des intervalles, la présence de ladite entité dans une desdites zones (Z1 à Zn) et le temps de ladite présence, en produisant ainsi un appariement;
un moyen (50) pour enregistrer des correspondances entre les appariements ainsi produits et lesdits incidents requis; et
un moyen d'alerte (58,59) pour déclencher une alerte pour l'entité lorsque la référence de temps pour un incident requis est atteinte et que l'incident ne possède pas d'appariement correspondant.

39. Système selon la revendication 38, où le moyen d'alerte déclenche une alerte qui est dirigée vers et délivrée à la personne.

40. Système selon la revendication 38 ou la revendication 39, où une pluralité desdites zones (Z1 à Zn) sont des zones dans une correspondance de déplacement.

41. Système selon l'une quelconque des revendications 38 à 40, où la destination (40) est la porte d'embarquement d'une correspondance de déplacement.

42. Système selon la revendication 40 ou 41, où au moins une zone est à l'extérieur de la correspondance.

43. Système selon l'une quelconque des revendications 38 à 42, où l'identifiant est un repère d'identification sans fil.

44. Système selon la revendication 43, où le repère est un repère passif et est excité par un signal transmis.

45. Système selon la revendication 43 ou 44, où les moyens de détection (20) sont des capteurs radio.

46. Système selon l'une quelconque des revendications 38 à 45, où les moyens de détection (20) sont également aptes à déterminer la séparation entre les moyens de détection et un identifiant.

47. Système selon l'une quelconque des revendications 38 à 46, où les moyens de détection peuvent déterminer la direction de l'identifiant à partir des moyens de détection.

48. Système selon l'une quelconque des revendications 38 à 47, où plusieurs capteurs sont agencés proches d'une limite entre deux zones de manière à réaliser une détermination inconditionnelle de la zone dans laquelle se trouve l'identifiant.

49. Système selon la revendication 48, où deux rangées de capteur sont prévues, un de chaque côté de la limite.

50. Système selon la revendication 48 ou la revendication 49, dans lequel d'autres agencements physiques sont prévus qui encouragent ou contraignent l'entité à se déplacer dans une direction particulière ou le long d'un chemin particulier entre les zones, ou à empêcher le retour de la zone suivante à une zone antérieure.

51. Système selon l'une quelconque des revendications 48 à 50, où au moins une desdites zones est un point d'étranglement.

52. Système selon l'une quelconque des revendications 38 à 51, où le moyen d'alerte comprend un système de diffusion (59).

53. Système selon l'une quelconque des revendications 38 à 52, où le moyen d'alerte comprend un système de messagerie électronique.

54. Système selon l'une quelconque des revendications 38 à 53, dans lequel le moyen de stockage (55) fait partie d'un ordinateur numérique.

55. Système selon l'une quelconque des revendications 38 à 54, où l'identifiant est apte à stocker des informations.

56. Système selon la revendication 55, où les informations stockées sur ledit identifiant sont aptes à être mises à jour par l'interaction avec un ou plusieurs desdits moyens de détection.

57. Système selon l'une quelconque des revendications 38 à 56, dans lequel au moins un moyen de détection se situe à un point d'étranglement à travers lequel sensiblement chaque entité doit passer.

58. Système selon la revendication 57, où au moins un moyen de détection se situe à un point d'étranglement à travers lequel chaque entité doit passer.

59. Système selon l'une quelconque des revendications 38 à 58, comprenant en outre des moyens pour modifier les caractéristiques desdits incidents requis en fonction des entrées dans le système.

60. Système selon l'une quelconque des revendications 38 à 59, comprenant en outre des moyens de détection secondaires pour détecter le passage d'une personne à travers une zone définie; des moyens pour enregistrer la correspondance entre chacun de ces passages et un passage d'un identifiant détecté par les moyens de détection (20); et un moyen d'alerte pour déclencher une alerte lorsque le passage d'une personne est détecté par lesdits moyens de détection secondaires sans qu'un passage correspondant d'un identifiant soit détecté.

61. Système selon la revendication 60, où ledit moyen de détection secondaire est l'un quelconque du groupe comprenant un détecteur infrarouge, un capteur vidéo, un faisceau de lumière ou un capteur mécanique.

62. Système selon l'une quelconque des revendications 38 à 61, comprenant en outre:
des moyens de stockage pour stocker une valeur limite du nombre de personnes autorisées dans au moins une desdites zones; et
des moyens pour surveiller le nombre total de personnes dans ladite zone; pour comparer ledit nombre total avec ladite valeur limite; et pour créer un signal qui limite le nombre de personnes entrant dans ladite zone lorsque le nombre total dépasse ladite limite ou lorsque le nombre total approche ladite limite.

63. Système selon l'une quelconque des revendications 38 à 62, comprenant en outre:
des moyens de stockage pour stocker une valeur limite pour le nombre de personnes autorisées dans au moins une desdites zones; et
des moyens pour surveiller le nombre total de personnes dans ladite zone; pour comparer ledit nombre total avec ladite valeur limite; et pour déclencher une alerte pour augmenter le nombre de personnes sortant de ladite zone lorsque le nombre total dépasse ladite limite ou lorsque le nombre total approche ladite limite.

64. Système selon la revendication 62 ou la revendication 63, où la limite est ajustée avec le temps.

65. Programme informatique qui, lorsqu'il est exécuté par un ordinateur, exécute le procédé selon l'une quelconque des revendications 1 à 37.

66. Produit de programme informatique contenant un programme informatique selon la revendication 65.
